# EUROPÄISCHE PATENTSCHRIFT

(11) **EP 3 288 890 B1**
(45) Veröffentlichungstag und Bekanntmachung des Hinweises auf die Patenterteilung: **06.11.2019**
(21) Anmeldenummer: 16702499.1
(22) Anmeldetag: 21.01.2016
(51) Int. Cl.: B82Y 30/00, C08L 23/10, C08L 23/14, H05B 3/12, C08K 3/04, C08K 7/22, C08K 13/02, C08L 23/08, C08L 23/12, C08L 23/16, H05B 3/14, H05B 3/34, H05B 3/36

(54) **LEITFÄHIGE FOLIE FÜR EINE WIDERSTANDSHEIZUNG**
CONDUCTIVE FILM FOR A RESISTANCE HEATER
FILM CONDUCTEUR POUR CHAUFFAGE RÉSISTIF

(30) Priorität: 28.04.2015 DE 102015207818
(43) Veröffentlichungstag der Anmeldung: 07.03.2018
(73) Patentinhaber: Benecke-Kaliko AG, 30419 Hannover (DE)
(72) Erfinder: WEBER, Daniel, 73035 Göppingen (DE); MALNER, Thomas, 73033 Göppingen (DE); BÜHRING, Jürgen, 30900 Wedemark (DE); SOSTMANN, Stefan, 30855 Langenhagen (DE)
(74) Vertreter: Kilsch, Armin Ralph
(86) Internationale Anmeldenummer: PCT/EP2016/051178
(87) Internationale Veröffentlichungsnummer: WO 2016/173725

(56) Entgegenhaltungen:
- EP-A1- 2 224 784
- WO-A1-2005/012411
- WO-A2-2009/003853
- DE-A1-102007 007 617
- DE-A1-102010 043 472

## Beschreibung

### Hintergrund

Die überwiegende Zahl der Kraftfahrzeuge wird heutzutage von Verbrennungsmotoren angetrieben. Verbrennungsmotoren wandeln einen beträchtlichen Anteil der ihnen in Form von Brennstoffen zugeführten Energie in Abwärme um. Damit es nicht zur Zerstörung des Motors durch Überhitzung kommt, muss diese Wärme an die Umgebung abgeführt werden. Sie kann deshalb mit vergleichsweise wenig Aufwand zur Beheizung des Fahrgastraumes ausgenutzt werden.

Die überschüssige Wärme wird zuerst von der mittels einer Pumpe im Kreis geführten Kühlflüssigkeit aufgenommen. Mit Hilfe eines Wärmetauschers wird sie an einen zweiten Flüssigkeitskreislauf übergeben. Hier durchströmt die erwärmte Flüssigkeit erneut einen Wärmetauscher. Durch einen Ventilator, der Luft über diesen Wärmetauscher strömen lässt, wird die Wärme schließlich über entsprechende Luftkanäle in den Innenraum geleitet.

Bei Ablösung des bis jetzt weitverbreiteten Antriebskonzeptes der Verbrennungsmotoren durch Elektromotoren, steht keine Abwärme mehr zur Beheizung des Fahrzeuginnenraumes zur Verfügung. Dies liegt darin begründet, dass Elektromotoren einerseits erst nach längerer Betriebsdauer und andererseits grundsätzlich weniger Abwärme als Verbrennungsmotoren erzeugen.

Alternativ kann die Beheizung des Innenraumes elektrisch erfolgen. Studien haben gezeigt, dass durch die gezielte Erwarmung von Flächen im automobilen Innenraum sehr schnell ein angenehmes Wärmeempfinden beim Fahrgast erzeugt werden kann. Die effizienteste Lösung für die Beheizung von Flächen ist eine direkte Erwärmung der Oberfläche, so dass der komplette Aufbau dahinter zur Isolierung gegenüber der Umwelt genutzt werden kann.

Ein Material, das standardmäßig zur Herstellung von Bauteilen für den automobilen Innenraum eingesetzt wird, ist die TPO-Folie. TPO-Folien sind mehrschichtige Aufbauten, wobei der wesentliche Materialanteil eine Mischung verschiedener Polyolefinkomponenten darstellt. TPO-Folien sind thermoplastisch und lassen sich in verschiedenen Tiefziehverfahren z.B. positiv Tiefziehen, negativ Tiefziehen (IMG) oder Hinterpressverfahren (LPM) zu Bauteilen verarbeiten.

Elektrisch leitfähige sowie heizfähige Kunststoffmaterialien, die teilweise auch begrenzt dehnfähig bzw. Kaltverstreckbar sind, sind hinreichend aus der Patentliteratur bekannt. Eine Verarbeitung durch Thermoformen ist hier allerdings nicht beschrieben.

In EP 0 773 704 B1 wird ein "flexibles Kunststoff-Heizelement" beschrieben, das unter anderem als Fußbodenheizung verwendbar ist. Dieses Heizelement besteht aus Polyethylen und Ruß. Die Umwandlung von elektrischer Energie in Wärme ist mit Carbon Nanotubes ebenfalls möglich.

In US 2010 003 80 25 A1 wird ein wärmegenerierender Hot-Melt-Klebstoff auf Polyolefinbasis beschrieben, der Carbon Nanotubes als leitfähigen Zusatz enthält.

In DE 602 204591 wird ein elektrisch leitfähiges Polyolefin beschrieben, dass mit Leitruß versetzt ist.

Ein dehnfähiger Polymerwerkstoff, dadurch gekennzeichnet, dass der Polymerwerkstoff eine vulkanisierte thermoplastfreie Kautschukmischung ist, der einen elektrisch leitfähigen Zusatz und gleichzeitig eine ionische Flüssigkeit beinhaltet, wird in DE 10 2009 044 245 A1 beschrieben.

In der Patentschrift WO 2009/003853 wird die Gleichstromleitfähigkeit dieses Materials bei einer Spannung von 10 Volt an einem Streifen der Dimension 50 x 12 x 2 mm (Lange x Breite x Stärke), folgendermaßen beschrieben:
80 kΩ bei 0 % Dehnung; 120 kΩ bei 10 % Dehnung (R/R0=1,5), 200 kΩ bei 20 % Dehnung (R/R0=2,5); 300 kΩ bei 35 % Dehnung (R/R0=3,7); 550 kΩ bei 50 % Dehnung (R/R0=6,9); 1,1 MΩ bei 75 % Dehnung (R/R0=13,8)

Die Verwendung von thermoplastischen Elastomerzusammensetzungen für die Herstellung von Folien und Formteilen, die beispielsweise im Automobilinnenbereich eingesetzt werden, ist z. B. aus der DE 100 18 196 A1 bekannt. Dabei können unterschiedliche Typen von thermoplastischen Elastomeren zum Einsatz kommen, wie thermoplastische Polyurethane (TPU) oder thermoplastische Elastomere auf Olefinbasis (TPO), wobei letztere z. B. Verschnitte aus (vernetztem) Ethylen-Propylen-Dien-Kautschuk (EPDM) mit Polyethylen (PE) und/oder Polypropylen (PP) sein können. Thermoplastische Elastomere zeichnen sich dadurch aus, dass sie sich im Bereich üblicher Gebrauchstemperaturen gummielastisch verhalten, aber bei höherer Temperatur wie Thermoplaste verarbeitet werden können.

Die Formteile für den Automobilinnenbereich können als Überzug von Armaturenbrettern, Türeinsätzen, Sonnenblenden etc. im Automobilinnenbereich eingesetzt werden und bestehen üblicherweise aus einer mehrschichtigen, unterschäumten Folie, die auf ihrer Oberseite eine dreidimensional strukturierte, geprägte Oberfläche aufweist, nämlich eine so genannte Musterung oder Narbung in verschiedensten Formen und Ausführungen. Die als Kompaktfolie ausgebildete Oberflächenfolie ist dabei auf der Unterseite mit einer Schaumschicht niedriger Dichte als Unterschicht versehen, die eine ansprechende Haptik, d.h. eine angenehm "weiche" Griffigkeit des Materials bewirkt. Die geschäumte Schicht kann dabei vor oder nach der Formgebung aufgebracht werden. Für die Oberflächenfolie und die geschäumte Unterschicht sind schon vielfältige Materialien wie Polyvinylchlorid (PVC), Polypropylen (PP), thermoplastische Polyolefine (TPO) usw. oder Kombinationen aus solchen Materialien eingesetzt worden.

Im Stand der Technik sind zur Herstellung solcher Formteile verschiedene Verfahren bekannt, zum Beispiel das Standard-Tiefziehverfahren, bei dem das Einformen einer vorher hergestellten und durch Walzverfahren mit einer Oberflächen-Prägung oder -Narbung versehenen Folie in eine dreidimensionale, bauteil-geometrische Struktur durch das Einfahren eines die spätere Bauteilkontur bildenden Tiefziehstempels in die Folie erfolgt. Ein weiteres Verfahren zur Herstellung von werkzeugfallenden einzelnen Formteilen ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff "narbgebendes Negativ-Tiefziehverfahren" übersetzen.

Es ist Aufgabe der Erfindung, eine thermoplastische Zusammensetzung bereitzustellen, die elektrisch leitfähig und elektrisch heizfähig ist und die durch Tiefziehen in eine gewünschte Form gebracht werden kann wobei die elektrische Leitfähigkeit und/oder Heizfähigkeit, z. B. nach dem Tiefziehen, auch bei hohen Dehnungen auf einem hohen Niveau verbleibt. Gleichzeitig soll durch die Zusammensetzung eine homogene und schnelle Heizwirkung gewährleistet werden und die kundenrelevanten optischen Eigenschaften der Fläche sollen nicht beeinträchtigt werden.

Eine homogene Erwärmung einer größeren Fläche soll durch Anwendung der Erfindung schnell möglich sein.

Insbesondere soll das erfindungsgemäße elektrisch leitfähige Polymersystem durch Tiefziehen bearbeitbar sein und zugleich elektrisch leitfähig und/oder elektrisch heizbar sein, ohne dass zusätzliche Arbeitsschritte notwendig sind. Das Dekormaterial soll die Anforderungen insbesondere auch der Automobilindustrie an diese Materialien erfüllen.

### Zusammenfassung

Die oben beschriebene Aufgabe wird durch die erfindungsgemäßen Zusammensetzungen gelöst.

Entsprechend richtet sich ein Aspekt der vorliegenden Erfindung auf eine Zusammensetzung bestehend aus einem Matrixpolymer, Carbon Nanotubes, Leitruß und ionischer Flüssigkeit, bevorzugt auf eine thermoplastische Zusammensetzung umfassend Matrixpolymer bestehend aus Polyolefin, TPE-Polyolefin oder TPE (Thermoplastische Elastomere), CNT (Carbon-Nanotubes), Leitruß und organisches Flüssigsalz, wobei
der Anteil an Matrixpolymer in der Zusammensetzung von 55 Gew.% bis 81,5 Gew.% bezogen auf das Gesamtgewicht der Summe aus Matrixpolymer, CNT, Leitruß und organisches Flüssigsalz beträgt; und
der Anteil an CNT in der Zusammensetzung von 3 Gew.% bis 10 Gew.% bezogen auf das Gesamtgewicht der Summe aus Matrixpolymer, CNT, Leitruß und organisches Flüssigsalz beträgt; und
der Anteil an Leitruß in der Zusammensetzung von 15 Gew.% bis 30 Gew.% bezogen auf das Gesamtgewicht der Summe aus Matrixpolymer, CNT, Leitruß und organisches Flüssigsalz beträgt; und der Anteil an organischen Flüssigsalz in der Zusammensetzung von 0,15 Gew.% bis 5 Gew.% bezogen auf das Gesamtgewicht der Summe aus Matrixpolymer, CNT, Leitruß und organisches Flüssigsalz beträgt; und
die Summe aus Matrixpolymer, CNTs, Leitruß und organischem Flüssigsalz mindestens 65 Gew.% bezogen auf das Gesamtgewicht der Zusammensetzung beträgt.

Eine bevorzugte Ausführungsform richtet sich auf eine erfindungsgemäße Zusammensetzung, wobei das Matrixpolymer aus mindestens einem Polyolefin besteht.

Eine weitere bevorzugte Ausführungsform richtet sich auf eine erfindungsgemäße Zusammensetzung, wobei das Matrixpolymer aus einer Kombination aus Polyolefin und TPE besteht.

Eine weitere bevorzugte Ausführungsform richtet sich auf eine erfindungsgemäße Zusammensetzung, wobei das Matrixpolymer aus TPE besteht.

Eine weitere bevorzugte Ausführungsform richtet sich auf eine erfindungsgemäße Zusammensetzung, wobei das organische Flüssigsalz ein organisches Kation enthält, das ausgewählt ist aus der Gruppe bestehend aus gegebenenfalls substituiertem aromatischen Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, und ein gegebenenfalls substituiertes aliphatisches C1-C12-Aminoalkyl.

Eine weitere bevorzugte Ausführungsform richtet sich auf eine erfindungsgemäße Zusammensetzung, wobei das organische Flüssigsalz aus einem Salz besteht worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, C₁-C₆-Alkylammonium-, jeweils mit ein, zwei oder drei Gruppen unabhängig voneinander ausgewählt aus Amino, C₁-C₆-Hydroxyalkyl, Hydroxy, Halogen, C₁-C₆-Halogenalkyl, C₁-C₆-Alkyl substituiertes Imidazolinium-, Pyridinium-, Pyrrolidinium-, Guanidinium-, Uronium-, Thiouronium-, Piperidinium-, Morpholinium-, Phosphonium-, und Alkylammonium-Kation.

Eine weitere bevorzugte Ausführungsform richtet sich auf eine erfindungsgemäße Zusammensetzung, wobei die Primärpartikel eines Leitrußes einen Durchmesser im Bereich von 5 nm bis 300 nm aufweisen.

Eine weitere bevorzugte Ausführungsform richtet sich auf eine erfindungsgemäße Zusammensetzung, wobei der Faserdurchmesser der CNT im Bereich von 1 nm bis 30 nm liegt und die Faserlänge im Bereich von 500 nm bis 15 µm liegt.

Ein weiterer Aspekt bezieht sich auf die Verwendung einer erfindungsgemäßen Zusammensetzung als Beschichtungsmaterial.

Ein weiterer Aspekt bezieht sich auf die Verwendung einer erfindungsgemäßen Zusammensetzung zum Aufbau mehrschichtiger Verbundgebilde.

Ein weiterer Aspekt richtet sich auf ein Verfahren zur Herstellung einer erfindungsgemäßen Zusammensetzung umfassend die folgenden Verfahrensschritte:
- Vermischen einer Schmelze eines Polyolefins /einer TPE-Polyolefin-Mischung oder eines TPEs mit elektrisch leitfähigen Partikeln und
- Zufügen mindestens eines organischen Flüssigsalzes.

Ein weiterer Aspekt richtet sich auf eine Polymerfolie hergestellt oder herstellbar durch Extrusion einer erfindungsgemäßen Zusammensetzung.

Ein weiterer Aspekt richtet sich auf ein flexibles Kunststoffheizelement, umfassend eine erfindungsgemäße Polymerfolie sowie zwei an gegenüberliegenden Rändern der Polymerfolie fixierten und mit dieser elektrisch verbundene Elektroden.

Noch ein weiterer Aspekt richtet sich auf ein Laminat, umfassend ein von einer Deckschicht aus einem elektrisch isolierenden Kunststoffmaterial bedecktes flexibles erfindungsgemäßes Kunststoffheizelement, wobei das elektrisch isolierende Kunststoffmaterial kompakt oder geschäumt ist.

Noch ein weiterer Aspekt richtet sich auf ein Trilaminat, umfassend eine erfindungsgemäße Polymerfolie, die auf ihren Flachseiten jeweils mit einer Deckschicht aus einem elektrisch isolierenden Kunststoffmaterial bedeckt ist, wobei insbesondere eine der Deckschichten aus einem kompakten und die andere aus einem geschäumten elektrisch isolierenden Kunststoffmaterial besteht oder beide Deckschichten aus einem kompakten elektrisch isolierenden Kunststoffmaterial bestehen.

### Detaillierte Beschreibung

Die Erfindung ist eine thermoplastische Polymermischung mit leitfähigen Additiven, die bei Raumtemperatur einen Oberflächenwiderstand von kleiner 100 Ω aufweist.

Eine erfindungsgemäße thermoplastische Zusammensetzung umfassend ein Matrixpolymer, bevorzugt ausgewählt aus Polyolefin, TPE-Polyolefin oder TPE, Carbon-Nanotubes (CNTs), Leitruß und organisches Flüssigsalz, wobei der Anteil an Matrixpolymer in der Zusammensetzung von 55 Gew.% bis 81,5 Gew.% bezogen auf das Gesamtgewicht der Summe aus Matrixpolymer, CNT, Leitruß und organisches Flüssigsalz beträgt; und der Anteil an CNT in der Zusammensetzung von 3 Gew.% bis 10 Gew.% bezogen auf das Gesamtgewicht der Summe aus Matrixpolymer, CNT, Leitruß und organisches Flüssigsalz beträgt; und der Anteil an Leitruß in der Zusammensetzung von 15 Gew.% bis 30 Gew.% bezogen auf das Gesamtgewicht der Summe aus Matrixpolymer, CNT, Leitruß und organisches Flüssigsalz beträgt; und der Anteil an organischen Flüssigsalz in der Zusammensetzung von 0,15 Gew.% bis 5 Gew.% bezogen auf das Gesamtgewicht der Summe aus Matrixpolymer, CNT, Leitruß und organisches Flüssigsalz beträgt; und die Summe aus Matrixpolymer, CNTs, Leitruß und organischem Flüssigsalz mindestens 65 Gew.% bezogen auf das Gesamtgewicht der Zusammensetzung beträgt.

Die Mischung lässt sich als Folie ausformen und in einem Tiefziehprozess zu einer dreidimensionalen, elastischen Folienhaut verstrecken.

Die Folie ist dadurch gekennzeichnet, dass bis zu Dehnungen (heißverstreckt) von 150 % ein Oberflächenwiderstand von 100 Ω nicht überschritten wird. Aufgrund der beschriebenen Eigenschaften ist eine mögliche Anwendung die Verwendung als Widerstandsheizung im Innenraum von Kraftfahrzeugen.

Die Anforderungen zur Bauteilherstellung eine Dehnung (Heißverstreckung) von 150 % zu erlauben ohne dass die Heizfähigkeit verloren geht, setzt voraus, dass das perkolative Netzwerk aus leitfähigen Füllstoffen nur bedingt beschädigt und keinesfalls zerstört werden darf. Ein Kunststoffmaterial, das die beschriebenen Anforderungen erfüllen kann, existiert bis jetzt nicht. Durch die vorliegende Erfindung kann diese Lücke geschlossen werden.

Das erfindungsgemäße heizfähige Kunststoffmaterial beruht bevorzugt auf einer Polyolefin- oder TPE-Polyolefin- oder TPE-Zusammensetzung, die eine Mischung aus verschiedenen partikularen elektrisch leitfähigen Zusätzen und mindestens ein organisches Flüssigsalz enthält.

Bei den partikulären leitfähigen Zusätzen kann es sich um Nanomaterialien handeln.

Von besonderer Bedeutung ist die ionische Flüssigkeit. Diese kann z. B. in Form eines speziellen Masterbatches auf TPU-Basis eingesetzt werden, der mit Polyolefinen begrenzt verträglich ist.

Ohne an die Erklärung gebunden zu sein wird davon ausgegangen, dass Elektronen in der Lage sind, Lücken zwischen leitfähigen Partikeln durch Tunneln zu überwinden. Der Abstand der betroffenen Partikel muss dazu aber unterhalb eines gewissen Grenzwertes liegen. Durch die Gegenwart der ionischen Flüssigkeit wird in diesem Modell nun der Grenzwert, bis zu welchem das Tunneln für Elektronen möglich ist, angehoben. Das heißt, leitfähige Partikel können sich weiter voneinander entfernen, ohne dass die Leitfähigkeit des perkolativen Netzwerkes in größerem Umfang einbricht. Dies erlaubt dann die Heißverstreckung des Kunststoffmaterials, wobei der hervorgerufene Verzug mehr als 100 % betragen kann.

Leitruß (kommerzielle Verfügbarkeit) als alleiniger Füllstoff kann die Anforderungen nicht erfüllen, da die Füllgrade zum Erreichen der erforderlichen Leitfähigkeit so hoch sind, dass der elastische Charakter des Materials weitgehend verloren geht und auch eine Dehnung (Heißverstreckung) die zur Bauteilherstellung notwendig ist, nicht mehr erreicht wird.

Mit Carbon Nanotubes als alleinigem Füllstoff können die Anforderungen ebenso nicht erfüllt werden, da schon bei niedrigen Füllgraden die Versprödung überproportional zunimmt, so dass auch hier kein elastisches Material mit der notwendigen Leit- und Dehnfähigkeit dargestellt werden kann.

Die ionische Flüssigkeit alleine hat einen sehr polaren Charakter und neigt zur Phasenseparation von der unpolaren Polyolefinmatrix, wodurch der erreichbare Füllgrad sehr begrenzt ist. Die beiden Materialklassen sind praktisch nicht mischbar. Die realisierbaren Mischungen liegen bezüglich der Leitfähigkeit weit unterhalb des Zielbereiches.

### Definitionen

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Der Ausdruck "umfassen" (oder "umfassend") bezogen auf die erfindungsgemäßen Zusammensetzungen oder Bestandteile dieser Zusammensetzungen bedeutet, dass mindestens die dem Ausdruck "umfassen" (oder "umfassend") folgenden Komponenten in einer erfindungsgemäßen Zusammensetzung bzw. in Bestandteilen davon in selbiger vorliegen müssen. Dem Fachmann ist jedoch klar, dass generell auch weitre Komponenten in einer derartigen erfindungsgemäßen Mischung vorliegen können bzw. weitere dieser Bestandteile vorliegen können, aber nicht zwangsläufig müssen. Entsprechend bezieht sich eine Ausführungsform, wenn in der vorliegenden Beschreibung der Erfindung der Ausdruck "umfassen" (oder "umfassend") genutzt wird immer auch auf eine Ausführungsform, in der die Liste der Komponenten in einer erfindungsgemäßen Zusammensetzung (oder einer Liste möglicher Komponenten/Ausführungsformen eines Bestandteils), die dem Ausdruck "umfassen" (oder "umfassend") folgen, abschließend ist, d.h. der Ausdruck "umfassen" (oder "umfassend") beinhaltet auch Zusammensetzungen, die nur die aufgelisteten Komponenten enthält (bzw. eine Aufzählung möglicher Komponenten/Ausführungsformen eines Bestandteils, die abschließend ist). In anderen Worten, der Ausdruck "umfassen" ist normalerweise nicht einschränkend, kann jedoch in einer Ausführungsform auch limitierend sein (bestehend aus).

Der Ausdruck Matrixpolymer wie hierin genutzt bezieht sich auf eine chemische Verbindung aus Ketten- oder verzweigten Molekülen (Makromolekülen), die wiederum aus gleichen oder gleichartigen Einheiten (konstitutionellen Repetiereinheiten) bestehen und die nach erfolgter Polymerisierung den Grundkörper der erfindungsgemäßen Zusammensetzung bilden.

TPE (Thermoplastische Elastomere) im Sinne der vorliegenden Erfindung haben in Teilbereichen physikalische Vernetzungspunkte (Nebenvalenzkräfte oder Kristallite), die sich bei Wärme auflösen, ohne dass sich die Makromoleküle zersetzen. TPEs sind dem Fachmann bekannt. Es handelt sich um Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Daher lassen sie sich wesentlich besser verarbeiten als normale Elastomere. So können auch Kunststoffabfälle wieder eingeschmolzen und weiter verarbeitet werden.

In der Herstellung gewinnen thermoplastische Elastomere vermehrt Anwendung in Karosseriedichtungen von Automobilen sowie in Bauelementen. Sie können extrudiert, spritzgeformt oder auch blasgeformt werden und werden in der Regel gebrauchsfertig bezogen.

Als Polyolefin im Sinn der vorliegenden Erfindung kommen Homopolymere und Copolymere von alpha-Olefinen mit 2 bis 12 C-Atomen infrage, beispielsweise von Ethylen, Propen, 1-Buten, 1-Hexen oder 1-Octen. Weiterhin geeignet sind Copolymere und Terpolymere, die zusätzlich zu diesen Monomeren weitere Monomere, insbesondere Diene, enthalten, wie beispielsweise Ethylidennorbornen, Cyclopentadien oder Butadien. Auch Copolymere von alpha-Olefinen mit polaren Comonomeren, wie Vinylacetat, Acrylsäure oder Acrylsäureester sind als Werkstoffe geeignet oder können den unpolaren Polyolefinen als Blendkomponente zur weiteren Verbesserung der Eigenschaften zugesetzt werden. Bevorzugte Polyolefine sind Polyethylen, Polypropylen, Polybutylen und/oder Copolymere von Ethen mit Propen, 1-Buten, 1-Hexen oder 1-Octen. Grundsätzlich kann hiervon jeder handelsübliche Typ eingesetzt werden. So kommen beispielsweise infrage: lineares Polyethylen hoher, mittlerer oder niedriger Dichte, LDPE (low density Polyethylen), Ethylencopolymere mit kleineren Mengen (bis maximal ca. 40 Gew.-%) an Comonomeren wie Propen, 1-Buten, 1-Hexen, 1-Octen, n-Butylacrylat, Methylmethacrylat, Maleinsäureanhydrid, Styrol, Vinylalkohol, Acrylsäure, Glycidylmethacrylat o.ä., isotaktisches oder ataktisches Homopolypropylen, Randomcopolymere von Propen mit Ethen und/oder 1-Buten, Ethylen-Propylen-Blockcopolymere und dergleichen mehr. Derartige Polyolefine können auch eine Schlagzähkomponente wie z.B. EPM- oder EPDM-Kautschuk oder SEBS enthalten. Darüber hinaus können sie auch, dem Stand der Technik entsprechend, funktionelle Monomere wie Maleinsäureanhydrid, Acrylsäure oder Vinyltrimethoxysilan aufgepfropft enthalten. Bevorzugt sollte der Comonomeren-Gehalt der Ethylencopolymere 1 mol-% der Gesamtmenge eingesetzter Monomere nicht überschreiten. Bevorzugte Comonomere sind 1-Olefine, besonders bevorzugte Comonomere sind 1-Buten, 4-Methyl-1-penten, 1-Hexen und 1-Octen. Weiterhin kann es sich bei dem Polyethylen auch um ein Blend aus zwei oder mehr Polyethylen-Komponenten handeln. Den Ethylenhomo- oder -copolymere können weiterhin übliche Zusatzstoffe und Hilfsmittel, wie z.B. Stabilisatoren gegen schädliche Verarbeitungseinflüsse, gegen Wärmeoxidation, Alterung oder UV-Einfluss sowie Farbstoffe, organische und anorganische Pigmente bzw. Flammschutzmittel zugesetzt sein.

Als "thermoplastische Polyurethane" im Sinne der vorliegenden Erfindung können solche auf der Basis von Polyethern und/oder Polyestern mit aliphatischen und/oder aromatischen Gruppen eingesetzt werden. Vorzugsweise handelt es sich bei dem thermoplastischen Polyurethan um eines mit aliphatischen Gruppen. Bevorzugt ist, wenn es sich bei der Isocyanatkomponente der thermoplastischen Polyurethans um ein Hexamethylendiisocyanat oder ein Isophorondiisocyanat handelt. Unmodifizierte Copolymere aus Ethylen und/oder Propylen und polarem Monomer sind solche Copolymere, die durch alleinige Polymerisation ohne nachträgliche Reaktion mit weiteren Substanzen erhalten werden.

Die in dieser Schrift verwendeten Angaben bezüglich Gewichtsverhältnissen bezogen auf die Menge an (Gesamt)Matrixpolymer beziehen sich immer auf die Gesamtmenge des bei der Herstellung der erfindungsgemäßen Zusammensetzung verwendeten Matrixpolymeres. Bei ungelösten Matrixpolymer ist es die Gesamtmenge des ungelösten Matrixpolymers, bei Verwendung eines in einem Lösungsmittel gelösten Matrixpolymers - der Begriff umfasst vollständig gelöstes Matrixpolymer, teilweise in einem Lösungsmittel lösliches Matrixpolymere und einer Matrixpolymerdispersion zur Herstellung einer erfindungsgemäßen Zusammensetzung - auf den polymeren Festkörper eines (teilweise)gelösten bzw. dispersierten Matrixpolymers, d.h. auf die Gesamtmenge des matrixpolymeren Festkörpers, der (teilweise) gelösten wurde bzw. auf den polymeren Festkörper der Matrixpolymerdispersion.

Der Ausdruck "elektrisch leitfähige Partikel" wie hierin genutzt bezieht sich auf eine Kombination aus Carbon-Nanotubes und Leitruß.

Der Ausdruck "Leitruß" (Carbon Black - CAS No. 1333-86-4) wie hierin benutzt ist dem Fachmann bekannt. Es handelt sich um einen Industrieruß und besteht aus kleinen, meist kugelförmigen Primärpartikel. Diese haben meist eine Größe von 5 bis 300 Nanometern. Die Primärpartikel können Aggregate bilden. Viele dieser Aggregate lagern sich zusammen und bilden so Agglomerate. Durch Variation der Herstellbedingungen können sowohl die Größe der Primärteilchen als auch deren Aggregierung gezielt eingestellt werden.

"Carbon Nanotubes" (Kohlenstoffnanoröhren bzw. CNT) sind röhrenförmige Gebilde (molekulare Nanoröhren) aus Kohlenstoff und dem Fachmann bekannt. Ihre Wände bestehen aus Kohlenstoff, wobei die Kohlenstoffatome eine wabenartige Struktur mit Sechsecken und jeweils drei Bindungspartnern einnehmen. Typischerweise liegt der Durchmesser der Nanotubes im Bereich von 1nm bis 50 nm. Längen von 1 µm bis zu 20 cm für Röhrenbündel wurden bereits erreicht. Einwandige und mehrwandige CNTs mit Durchmessern von 5 nm bis 10 nm und Längen von 1 µm bis 10 µm sind ohne weiteres kommerziell erhältlich. Bevorzugt beträgt die Länge von CNTs im Sinne der vorliegenden Erfindung 500 nm bis 15 µm. Es wird zwischen ein- und mehrwandigen, zwischen offenen oder geschlossenen Röhren (mit einem Deckel, der einen Ausschnitt aus einer Fullerenstruktur hat) und zwischen leeren und gefüllten Röhren (beispielsweise mit Silber, flüssigem Blei) unterschieden.

Die Bedeutung des Ausdrucks "Folie" im Zusammenhang mit Polymeren, insbesondere Matrixpolymeren im Sinne der vorliegenden Erfindung, ist dem Fachmann geläufig. Generell ist eine Folie ein zweidimensional ausgedehntes Gebilde mit annähernd gleicher Dicke, wobei die Abmessungen der Fläche jeweils mindestens um einen Faktor 10, wie z. B. mindestens um einen Faktor 20, oder mindestens um einen Faktor 100 größer sind als die durchschnittliche Dicke. Eine Polymerfolie wie hierin beschrieben umfasst auch einen Polymerfilm, der auf eine Fläche aufgetragen ist. Entsprechend kann ein folienbildendes Matrixpolymer auch oder nur ein filmbildendes Matrixpolymer sein.

Der Ausdruck "organisches Flüssigsalz" wie hierin genutzt bezieht sich auf ein Salz, das bei 25 °C und 1000 hPa, bevorzugt mindestens zwischen 25 °C und 100 °C bei 1000 hPa, durch die schlechte Koordinierung der Ionen als Flüssigkeit vorliegt, und das ein organisches Ion, bevorzugt ein organisches Kation, aufweist. Eine Flüssigkeit im Sinne der vorliegenden Erfindung ist ein Stoff, dessen Teilchen sich ständig nichtperiodisch bewegen sowie keinerlei Fernordnung im physikalischen Sinne jedoch einer Nahordnung im physikalischen Sinne unterliegen, und deren mittlere freie Weglänge in der Größenordnung des Teilchendurchmessers liegt. Phasendiagramme bzw. das Bestimmen von Schmelz- und Siedepunkt zur Ermittlung des Aggregatzustandes eines Stoffes können durch den Fachmann mit bekannten Mitteln und Methoden erzeugt werden. Als bevorzugtes Beispiel sei hier DSC (Differential Scanning Calorimetry) genannt wie z. B. in J. Solution Chem (2008) 37, S. 1271-1287 beschrieben.

Nicht umfasst sind solche Kombinationen, die den Naturgesetzen widersprechen und die der Fachmann daher aufgrund seines Fachwissens ausgeschlossen hätte. Beispielsweise sind Ringstrukturen mit drei oder mehreren benachbarten O-Atomen ausgeschlossen.

### Erfindungsgemäße Zusammensetzungen

Eine erfindungsgemäße Zusammensetzung umfasst ein Matrixpolymer, mindestens ein organisches Flüssigsalz (OF), Leitruß und CNT.

Bevorzugt ist eine thermoplastische Zusammensetzung umfassend Matrixpolymer bestehend aus Polyolefin, TPE-Polyolefin oder TPE (Thermoplastische Elastomere), CNT (Carbon-Nanotubes), Leitruß und organisches Flüssigsalz, wobei der Anteil an Matrixpolymer in der Zusammensetzung von 55 Gew.% bis 81,5 Gew.% bezogen auf das Gesamtgewicht der Summe aus Matrixpolymer, CNT, Leitruß und organisches Flüssigsalz beträgt; und der Anteil an CNT in der Zusammensetzung von 3 Gew.% bis 10 Gew.% bezogen auf das Gesamtgewicht der Summe aus Matrixpolymer, CNT, Leitruß und organisches Flüssigsalz beträgt; und der Anteil an Leitruß in der Zusammensetzung von 15 Gew.% bis 30 Gew.% bezogen auf das Gesamtgewicht der Summe aus Matrixpolymer, CNT, Leitruß und organisches Flüssigsalz beträgt; und der Anteil an organischen Flüssigsalz in der Zusammensetzung von 0,15 Gew.% bis 5 Gew.% bezogen auf das Gesamtgewicht der Summe aus Matrixpolymer, CNT, Leitruß und organisches Flüssigsalz beträgt; und die Summe aus Matrixpolymer, CNTs, Leitruß und organischem Flüssigsalz mindestens 65 Gew.% bezogen auf das Gesamtgewicht der Zusammensetzung beträgt.

In einer bevorzugten Ausführungsform umfasst eine erfindungsgemäße Zusammensetzung CNT im Bereich von 3 Gew.% bis 5 Gew.%, Leitruß im Bereich von 20 Gew.% bis 26 Gew.%, organisches Flüssigsalz im Bereich von 1 Gew.% bis 2 Gew.% bezogen auf die Summe aus Matrixpolymer, CNT, Leitruß und organischem Flüssigsalz.

In einer weiteren bevorzugten Ausführungsform besteht eine erfindungsgemäße Zusammensetzung aus 4 Gew.% CNT, 23 Gew.% Leitruß und 1,5 Gew.% organisches Flüssigsalz und 71,5 Gew.% Matrixpolymer bezogen auf die Summe aus Matrixpolymer, CNT, Leitruß und organischem Flüssigsalz.

In einer weiteren bevorzugten Ausführungsform ist das Matrixpolymer eine thermoplastische Matrix umfassend PP-Copolymer, LLDPE (PE-LLD: lineares Polyethylen niederer Dichte), PE und TPV.

In einer weiteren bevorzugten Ausführungsform ist das Matrixpolymer eine thermoplastische Matrix umfassend 38 Gew.% eines PP-Copolymeren, 14,5 Gew.% LLDPE, 14,5 Gew.% PE und 29 Gew.% TPV, wobei das TPV einen MFI im Bereich von 10 bis 15 g/10 min besitzt (z. B. Milastomer 8030 NEM: Olefinbasiertes TPV, CAS 25038-36-2, Mitsui). Dem Fachmann ist bekannt, dass insbesondere bei käuflich erwerbbaren Ausgangsmaterialien Stabilisatoren und Verarbeitungshilfsmittel den Ausgangsmaterialien zugesetzt sein können. Diese können bis zu 4 Gew.% der thermoplastischen Matrix ausmachen.

In einer bevorzugten Ausführungsform ist die Summe aus Matrixpolymer, Leitruß, CNT und organischem Flüssigsalz einer erfindungsgemäße Zusammensetzung mindestens 80 Gew.-%, wie z. B. mindestens 90 Gew.-% oder mindestens 95 Gew.-%, bezogen auf das Gesamtgewicht der erfindungsgemäßen Zusammensetzung.

In einer weiteren bevorzugten Ausführungsform ist die Summe aus Matrixpolymer, Leitruß, CNT und organischem Flüssigsalz einer erfindungsgemäße Zusammensetzung größer 99 Gew.% wie z. B. 100 Gew.%, bezogen auf das Gesamtgewicht der erfindungsgemäßen Zusammensetzung.

In einer bevorzugten Ausführungsform ist das Matrixpolymer ein TPE.

In einer weiteren bevorzugten Ausführungsform ist das Matrixpolymer ein Polyolefin.

In einer weiteren Ausführungsform ist das Matrixpolymer eine TPE-Polyolefin Mischung.

In einer weiteren bevorzugten Ausführungsform liegt der Anteil an Matrixpolymer in der Zusammensetzung im Bereich von 55 Gew.% bis 81,85 Gew.% bezogen auf das Gesamtgewicht der Summe aus Matrixpolymer, Leitruß, CNT und organisches Flüssigsalz.

In einer weiteren bevorzugten Ausführungsform beträgt der Anteil an Carbon-Nanotubes in der Zusammensetzung von 3 Gew.% bis 10 Gew.% bezogen auf das Gesamtgewicht der Summe aus Matrixpolymer, Leitruß, CNT und organisches Flüssigsalz.

In einer weiteren bevorzugten Ausführungsform beträgt der Anteil an Leitruß in der Zusammensetzung von 15 Gew.% bis 30 Gew.% bezogen auf das Gesamtgewicht der Summe aus Matrixpolymer, elektrisch leitfähige Partikel und organisches Flüssigsalz.

In einer weiteren bevorzugten Ausführungsform beträgt der Anteil an organischen Flüssigsalz in der Zusammensetzung von 0,15 Gew.% bis 5 Gew.% bezogen auf das Gesamtgewicht der Summe aus Matrixpolymer, Leitruß, CNT und organisches Flüssigsalz.

Ohne an die Erklärung gebunden sein zu wollen kann davon ausgegangen werden, dass Elektronen in der Lage sind, Lücken zwischen leitfähigen Partikeln durch sogenanntes Tunneln zu überwinden. Der Abstand der betroffenen Partikel muss dazu aber unterhalb eines gewissen Grenzwertes liegen. Durch die Gegenwart von mindestens 0,15 Gew.% (bezogen auf das Gesamtgewicht der Summe aus Matrixpolymer, Leitruß, CNT und organischem Flüssigsalz) des organischen Flüssigsalzes wird in diesem Modell nun der Grenzwert, bis zu welchem das Tunneln für Elektronen möglich ist, angehoben. Das heißt, leitfähige Partikel können sich weiter voneinander entfernen, ohne dass die Leitfähigkeit des perkolativen Netzwerkes in größerem Umfang einbricht. Dies erlaubt die Verstreckung des Kunststoffmaterials, wobei der hervorgerufene Verzug mehr als 100 % betragen kann.

In einer weiteren bevorzugten Ausführungsform der vorliegenden Erfindung umfassen die übrigen Gewichtsanteile (z. B. 35 Gew.-%, 20 Gew.-%, 10 Gew.-% oder 5 Gew.-% bezogen auf das Gesamtgewicht der erfindungsgemäßen Zusammensetzung) einen oder mehrere Zusätze ausgewählt aus der Gruppe bestehend aus Flammschutzmittel, Pigmente und Einfärbemittel, Stabilisatoren gegen oxidativen, thermischen, hydrolytischen, strahlungsinduzierten oder mikrobiellen Abbau oder Alterung (Alterungsschutzmittel wie Antioxidantien, gehinderte Amine oder UV-Absorber etc., Hydrolyseschutzmittel, biozid wirksame Mittel), Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Hydrophobierungsmittel, Pigmente, Farbstoffe und Treibmittel. In einer weiteren bevorzugten Ausführungsform bestehen die übrigen Gewichtsanteile (35 Gew.-%, 20 Gew.-%, 10 Gew.-% bzw. 95 Gew.-%) einer erfindungsgemäßen Zusammensetzung aus einen oder mehrere Zusätze der oben aufgezählten Komponenten.

In einer weiteren bevorzugten Ausführungsform besteht eine erfindungsgemäße Zusammensetzung aus Matrixpolymer(en), Leitruß, CNT und Flüssigsalz.

### Matrixpolymere

Als Matrixpolymere, bevorzugt folienbildende Matrixpolymere, können vielfältige Polymersysteme eingesetzt werden. Bevorzugt sind hier wiederum Polyolefine oder thermoplastische Elastomere (TPE) oder Mischungen aus diesen, die über übliche Folienherstellungsverfahren wie Kalandrieren, Gießfolienextrusion, Blasfolienextrusion oder Extrusion aus einer Breitschlitzdüse, verarbeitet werden können. Beispiele für solche Polymere sind thermoplastische Polyurethane, thermoplastische Polyolefine mit oder ohne elastomere Anteile oder PVC-Weichfolien. Weiterhin kann als Polymer auch ein elastomeres oder gummiartiges Polymer bzw. Mischungen hieraus als folienbildendes Element eingesetzt werden. Beispielhaft können ein- oder mehrkomponentige vernetzbare Silikonelastomersysteme eingesetzt werden.

TPEs können in Form von Blockcopolymeren oder Elastomerlegierungen eingesetzt werden.

Blockcopolymere besitzen innerhalb eines Moleküls Hart- und Weichsegmente.

Elastomerlegierungen sind Gemenge von fertigen Polymeren, der Kunststoff besteht aus mehreren Molekülsorten. Durch unterschiedliche Mischungsverhältnisse und Zuschlagmittel können so maßgeschneiderte Werkstoffe erhalten werden (beispielsweise zeigen Polyolefin-Elastomer aus Polypropylen (PP) und Naturgummi (NR) je nach Mengenverhältnis verschiedene Härtebereiche).

Generell können folgende TPE Gruppen unterschieden werden.
- TPO = Thermoplastische Elastomere auf Olefinbasis, vorwiegend PP/EPDM (Ethylen-Propylen-Dien-Kautschuk), z. B. Santoprene (AES/Monsanto)
- TPV = Vernetzte thermoplastische Elastomere auf Olefinbasis, vorwiegend PP/EPDM, z. B. Sarlink (DSM), Forprene (SoFter)
- TPU = Thermoplastische Elastomere auf Urethanbasis, z. B. Desmopan, Texin, Utechllan (Bayer)
- TPC = Thermoplastische Polyesterelastomere / Thermoplastische Copolyester, z. B. Hytrel (DuPont) oder Riteflex (Ticona)
- TPS = Styrol-Blockcopolymere (SBS, SEBS, SEPS, SEEPS und MBS), z. B. Styroflex (BASF), Septon (Kuraray), Thermolast (Kraiburg TPE) oder Saxomer (Polyplast Compound Werk GmbH)
- TPA = Thermoplastische Copolyamide, z. B. PEBAX (Arkema)

Bevorzugte TPEs sind TPEs des Typs TPO, TPV oder des Typs TPU oder Mischungen daraus.

Als unpolare thermoplastische Elastomere auf Olefinbasis bzw. thermoplastischer Polyolefinenverschnitt können unterschiedliche Polymere und Polymerverschnitte (Blends) eingesetzt werden, beispielsweise Ethylen-Propylen-Blends, Ethylen-Propylen-Kautschuk (EPM) oder Ethylen-Propylen-Dienkautschuk (EPDM) mit Polypropylen (PP) und/oder Polyethylen (PE).

Es können z. B. Verschnitte aus EPM (Ethylen-Propylen-Kautschuk) und/oder EPDM (Ethylen-Propylen-Dienkautschuk) mit PP (Polypropylen) und/oder PE (Polyethylen) eingesetzt werden. Um die Zusammensetzung hinsichtlich ihres Glanzes nach dem Tiefziehen zu optimieren, hat es sich als vorteilhaft erwiesen, wenn das zumindest eine thermoplastische Elastomer auf Olefinbasis ein Verschnitt aus EPDM mit PP und/oder PE ist. Dadurch wird vermieden, dass der für TPU typische hohe Glanz beim Verziehen oder Tiefziehen auftritt.

Gemäß einer vorteilhaften Weiterbildung der Erfindung ist das EPDM vernetzt (dadurch entsteht ein thermoplastisches Elastomer, dynamisch vernetzt, TPV) und die Größe der Weichsegmente aus EPDM ist kleiner als 50 µm, bevorzugt kleiner als 35 µm, besonders bevorzugt kleiner als 20 µm. Dadurch kann die für Folien im Automobilinnenbereich gewünschte Mattigkeit erzeugt werden. Die vernetzten EPDM-Segmente (Partikel) erzeugen eine Rauigkeit der Folienoberfläche, wodurch die Fähigkeit zur diffusen Lichtstreuung erhöht wird. Zudem erhöht die partielle Unverträglichkeit der TPU- und TPO-Phasen die Oberflächenrauigkeit der Folie. Die Oberfläche der aus den Folien hergestellten, tiefgezogenen Formteile weist bei einer Verstreckung von 60 bis 100 % in unlackierter Form einen Glanzgrad, gemessen unter einem Winkel von 60° mit einem Gerät Byk Gardner Mikro Gloss, von weniger als 3 auf.

Als Phasenvermittler können unterschiedlichste unmodifizierte Copolymere aus Ethylen und/oder Propylen und polarem Monomer einzeln oder in Kombination eingesetzt werden. Dazu zählen z. B. Copolymere aus Ethylen und/oder Propylen und ungesättigten Carbonsäuren, Estern von ungesättigen Carbonsäuren, Amiden von ungesättigen Carbonsäuren, Vinylestern (z. B. Vinylacetat oder Vinylpropionat) und Kohlenmonoxid. Beispiele für einsetzbare ungesättigte Carbonsäuren sind: Acrylsäure, Methacrylsäure, Fumarsäure, Itaconsäure, deren Ester und Amide. Die Monomere können einzeln oder in Kombination miteinander eingesetzt werden.

Vorzugsweise ist der zumindest eine Phasenvermittler ein Copolymer aus Ethylen und einem ungesättigten Carbonsäureester, besonders bevorzugt ein Copolymer aus Ethylen und einem Ester der Methacrylsäure. Diese Phasenvermittler haben sich als besonders wirksam im Hinblick auf die Verträglichkeit von TPU und TPO bzw. thermoplastischem Polyolefinverschnitt erwiesen.

Bevorzugt handelt es sich bei den Matrixpolymeren in den erfindungsgemäßen Zusammensetzungen um folienbildende Matrixpolymere.

In einer bevorzugten Ausführungsform liegt die Dicke einer Folie aus einer erfindungsgemäßen Zusammensetzung im Wesentlichen vor Tiefziehen über die gesamte Fläche der Folie im Bereich von 0,3 mm bis 1,5 mm wie z. B. von 0,3 mm bis 1 mm. Solche Foliendicken eignen sich z. B. für Beschichtungen von Kabinenteilen in Autos, Zügen oder Flugzeugen.

Die Dicke einer derartigen erfindungsgemäßen Folie liegt bei einem Verzug von 150% in einer bevorzugten Ausführungsform in einem Bereich von 40% bis 80% bezogen auf die Dicke einer erfindungsgemäßen Folie vor Tiefziehen, bevorzugt in einem Bereich von 50% bis 70% (z. B. kann die Dicke einer erfindungsgemäßen Folie vor Tiefziehen im Wesentlichen 500 µm betragen und nach einer Verstreckung von 150% im Wesentlichen 300 µm (= 60% bezogen auf die Dicke vor Verzug um 150 %) betragen.

Ein Laminat (unverstreckt) umfassend eine erfindungsgemäße Folie besitzt in einer bevorzugten Ausführungsform im Wesentlichen eine Dicke im Bereich von mindestens 1,5 mm wie z. B. von 1,5 mm bis 3,5 mm oder von 2,0 mm bis 3,0 mm.

Ein Trilaminat (unverstreckt) umfassend eine erfindungsgemäße Folie besitzt in einer bevorzugten Ausführungsform im Wesentlichen eine Dicke im Bereich von mindestens 1,5 mm wie z. B. von 1,5 mm bis 4,5 mm.

### Elektrisch leitfähige Partikel

Die elektrisch leitfähigen Partikel in der erfindungsgemäßen Zusammensetzung sind zum einen elektrisch leitfähiger Ruße (Leitruß) oder Grafit, bevorzugt Leitruß, und zum anderen Carbo-Nanotubes.

Bei Carbo-Nanotubes liegt der Faserdurchmesser bevorzugt bei maximal 50 nm z. B. in einem Bereich von 1 nm bis 30 nm, mehr bevorzugt in einem Bereich von 5 nm bis 20 nm. Bevorzugt beträgt die Faserlänge bei Carbo-Nanotubes mindestens 500 nm z. B. in einem Bereich von 500 nm bis 15 µm, mehr bevorzugt in einem Bereich von 500 nm bis 5 µm.

Besonders bevorzugt werden mehrwandige Carbo-Nanotubes (MWCNTs) mit einem Durchmesser in einem Bereich von 5 nm bis 20 nm und einer Länge in einem Bereich von 500nm bis 5 µm eingesetzt. Mehrwandige Carbo-Nanotubes sind beispielsweise über die Fa. Nanocyl beziehbar. z. B. Nanocyl™ NC 7000).

Als Leitruß werden bevorzugt Leitfähigkeitsruße eingesetzt (wie z. B. Ensaco Carbon Black 350 G, Ensaco Carbon Black 250 G, Printex XE 2, Printex XE 2B, Hiblack40 B2, Hiblack420 B, Ensaco 260 G).

In einer bevorzugten Ausführungsform besitzen die Primärpartikel eines Leitrußes einen Durchmesser im Bereich von 5 nm bis 300 nm, bevorzugt von 5 nm bis 200 nm, mehr bevorzugt von 5 nm bis 100 nm.

In einer weiteren bevorzugten Ausführungsform besitzen die Agglomerate eines Leitrußes einen Durchmesser im Bereich von 10 µm bis 100 µm, bevorzugt im Bereich von 20 µm bis 100 µm.

In einer weiteren bevorzugten Ausführungsform beträgt die spezifische Oberfläche von Leitruß im Bereich von 10 bis 1000 m²/g, bevorzugt im Bereich von 30 bis 500 m²/g.

### Organisches Flüssigsalz

Wie bereits erwähnt, hat es sich als vorteilhaft gezeigt, wenn die erfindungsgemäße Zusammensetzung neben Leitruß und CNT noch mindestens ein organisches Flüssigsalz enthält, das bei 25°C und 1000 hPa im flüssigen Aggregatzustand vorkommt (flüssiger Aggregatzustand = Zustand zwischen Schmelz- und Siedepunkt eines Stoffes).

In einer bevorzugten Ausführungsform besteht ein organisches Flüssigsalz aus einem Salz, das bei 1000 hPa mindestens zwischen 25°C und 100°C flüssig ist und mindestens ein organisches Ion besitzt. Bevorzugt handelt es sich bei dem organischen Ion um ein organisches Kation wie ein gegebenenfalls substituiertes aromatisches Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, oder wie ein gegebenenfalls substituiertes aliphatisches C₁-C₁₂-Aminoalkyl.

Ein organisches Ion ist ein Ion, dass - bis auf die elementare Form des Kohlenstoffs, wasserstofffreier Chalkogenide, Kohlensäure, Carbonate, Carbide, Cyanide, Cyanate und Thiocyanate - auf Kohlenstoff basiert und weitere funktionelle Gruppen wie Alkoholgruppen, Aminogruppen, Thiogruppen, Oxogruppen, Halogene etc. enthalten kann.

In einer besonders bevorzugten Ausführungsform besteht ein organisches Flüssigsalz aus einem Salz worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, oder C₁-C₆-Alkylammonium-Kation; jeweils mit ein, zwei oder drei Gruppen unabhängig voneinander ausgewählt aus Amino-, C₁-C₆-Hydroxyalkyl-, Hydroxy-, Halogen-, C₁-C₆-Halogenalkyl-, C₁-C₆-Alkyl- substituiertes Imidazolinium-, Pyridinium-, Pyrrolidinium-, Guanidinium-, Uronium-, Thiouronium-, Piperidinium-, Morpholinium-, Phosphonium-, oder Alkylammonium- Kation.

In einer weiteren besonders bevorzugten Ausführungsform besteht ein organisches Flüssigsalz aus einem Salz worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, oder Alkylammonium-Kation; mit ein, zwei oder drei Gruppen unabhängig voneinander ausgewählt aus Amino-, C₁-C₆-Hydroxyalkyl-, Hydroxy-, Halogen-, C₁-C₆-Halogenalkyl-, C₁-C₆-Alkyl- substituiertes Imidazolinium-, Pyridinium-, Pyrrolidinium-, Guanidinium-, Uronium-, Thiouronium-, Piperidinium-, Morpholinium-, Phosphonium-, oder Alkylammonium-Kation und worin das Anion ausgewählt ist aus der Gruppe bestehend aus Sulfat, Phosphat, Borat, Cyanamid, Borhalogenide wie Bortetrafluorid, Halogenide (Chlorid, Bromid, Iodid), Phosphorhalogenide wie Phosphorhexafluorid, Nitrat, Halogenate wie Chlorat, Trifluormethansulfonat, Methansulfonat, p-Toluolsulfonat, Thiocyanat, Alkylsulfate, Triflouracetate oder Trifluormethansulfonimide, bevorzugt sind Chlorid, Bromid, Iodid, mehr bevorzugt sind Sulfat, Borat oder Cyanamid.

Ganz besonders bevorzugt sind organische Flüssigsalze, die als Kation ein Imidazolinium, Pyridinium C₁-C₆-Alkylammonium, ein, zwei oder dreifach C₁-C₆-alkylierte Imidazolinium- oder Pyridiniumkationen enthalten und als Anion ein Chlorid, Bromid, Iodid, Sulfat, Phosphat, Cyanamid enthalten, besonders bevorzugt Sulfat oder Cyanamid enthalten wie beispielsweise 1-Ethyl-3-Methyl-Imidazolinium Ethylsulfat, 1-Ethyl-3-Methylimidazolium Dicyanamid, Tris-(2-Hydroxyethyl)-Methylammonium Methylsulfat oder 1-Butyl-4-Methylpyridinium-Tetrafluoroborat.

### weitere Bestandteile

Zusätzlich können weitere Bestandteile Teil einer erfindungsgemäßen Zusammensetzung sein. Dies sind z. B. Flammschutzmittel (bevorzugt in einem Bereich von 5 Gew.-% bis 35 Gew.-% bezogen auf das Gesamtgewicht der erfindungsgemäßen Zusammensetzung), Pigmente und Einfärbemittel, Stabilisatoren gegen oxidativen, thermischen, hydrolytischen, strahlungsinduzierten oder mikrobiellen Abbau oder Alterung (Alterungsschutzmittel wie Antioxidantien, gehinderte Amine oder UV-Absorber etc., Hydrolyseschutzmittel, biozid wirksame Mittel), Konservierungsmittel, Mattierungsmittel, Entschäumungshilfen, Verlaufshilfsmittel, Dispergierhilfsmittel, Weichmacher, Vernetzungshilfsmittel, Gleitmittel, Rheologiehilfsmittel, Trennmittel, Verstärkungsstoffe, Füllstoffe, Hydrophobierungsmittel, oder Treibmittel eingesetzt werden.

Als Flammschutzmittel werden insbesondere nicht halogenhaltige Flammschutzmittel eingesetzt, wobei der Einsatz halogenhaltiger Flammschutzmittel nicht ausgeschlossen ist. So ist auch der Einsatz von Brom- oder Chlor-haltigen organischen Verbindungen möglich, aber nicht bevorzugt, oder auch Kombinationen dieser Verbindungen mit Antimon-haltigen Verbindungen. Besonders geeignet sind stickstoffhaltige Flammschutzmittel wie Melamin- oder Guanidinderivate oder auch phosphorhaltige Flammschutzmittel wie Organophosphorverbindungen oder organische Verbindungen, die Stickstoff- und Phosphor enthalten. Insbesondere vorteilhaft ist der Einsatz von Flammschutzmitteln auf Basis von Metallhydroxiden wie Magnesiumhydroxid oder Aluminiumhydroxid oder auch der Einsatz von anorganischen borhaltigen oder ammoniumhaltigen Verbindungen. Andere mögliche anorganische Verbindungen enthalten beispielsweise Antimon, Molybdän oder elementaren Phosphor. Vorteilhaft kann auch der Einsatz von expandierbaren Graphit oder nanoskaligen Silikatderivaten als Flammschutzmittel sein.

Der Einsatz von Mischungen von Flammschutzmitteln kann insbesondere deutlich vorteilhaftere brandhemmende Eigenschaften erzeugen als es durch eine ausschließlich Partikel-Wirkung von einzelnen Flammschutzmitteln zu erwarten wäre (synergistischer Effekt).

Bevorzugt liegt der Anteil eines Flammschutzmittel bzw. der Summe aller in einer erfindungsgemäßen Zusammensetzung befindlichen Flammschutzmittel im Bereich von 5 Gew.-% bis 35 Gew.-% bezogen auf das Gesamtgewicht der erfindungsgemäßen Zusammensetzung, mehr bevorzugt im Bereich von 5 Gew.-% bis 20 Gew.-%.

Entsprechend richtet sich eine weitere bevorzugte Ausführungsform auf eine Zusammensetzung, bevorzugt eine thermoplastische Zusammensetzung, umfassend ein Matrixpolymer ausgewählt aus der Gruppe bestehend aus Polyolefin, TPE-Polyolefin oder TPE, Carbon-Nanotubes (CNTs), Leitruß und organisches Flüssigsalz, wobei der Anteil an Matrixpolymer in der Zusammensetzung von 55 Gew.% bis 81,5 Gew.% bezogen auf das Gesamtgewicht der Summe aus Matrixpolymer, CNT, Leitruß und organisches Flüssigsalz beträgt; und der Anteil an CNT in der Zusammensetzung von 3 Gew.% bis 10 Gew.% bezogen auf das Gesamtgewicht der Summe aus Matrixpolymer, CNT, Leitruß und organisches Flüssigsalz beträgt; und der Anteil an Leitruß in der Zusammensetzung von 15 Gew.% bis 30 Gew.% bezogen auf das Gesamtgewicht der Summe aus Matrixpolymer, CNT, Leitruß und organisches Flüssigsalz beträgt; und der Anteil an organischen Flüssigsalz in der Zusammensetzung von 0,15 Gew.% bis 5 Gew.% bezogen auf das Gesamtgewicht der Summe aus Matrixpolymer, CNT, Leitruß und organisches Flüssigsalz beträgt; und die Summe aus Matrixpolymer, CNTs, Leitruß und organischem Flüssigsalz mindestens 65 Gew.% bezogen auf das Gesamtgewicht der Zusammensetzung beträgt und ein Flammschutzmittel wobei das Gewicht des Flammschutzmittels bezogen auf das Gesamtgewicht der Zusammensetzung im Bereich von 5 Gew.-% bis 35 Gew.-% liegt.

Eine weitre Ausführungsform richtet sich auf eine erfindungsgemäße Zusammensetzung wobei die Summe der Gewichte aus Matrixpolymer, CNT, Leitruß und organischem Flüssigsalz mindestens 80 Gew.-% bezogen auf das Gesamtgewicht der Zusammensetzung beträgt und ein Flammschutzmittel wobei das Gewicht des Flammschutzmittels bezogen auf das Gesamtgewicht der Zusammensetzung im Bereich von 5 Gew.-% bis 20 Gew.-% liegt.

### Weitere Verwendungen

Folgende weitere Verwendungen der erfindungsgemäßen Zusammensetzung nach Applikation auf einen Untergrund sind möglich:
- Verwendung zur elektromagnetischen Abschirmung;
- Verwendung als elektrisch leitfähige Schicht oder Spur zur Verwendung oder zur Kontaktierung von elektronischen Bauteilen (wie LEDs, RFID-Chips, Kondensatoren, Mikroprozessoren etc.) auf flexiblen Untergründen (wie Textilien, Folien, Kunstleder etc.);
- Verwendung als elektrisch leitfähige Komponente in flexiblen Photovoltaikfolien;
- Verwendung als elektrisch leitfähige Komponente in flexiblen (resistiven, induktiven oder kapazitiven) Displays, Schaltern, Reglern etc. ;
- Verwendung als elektrisch leitfähige Komponente in flexiblen OLED-Anwendungen;
- Verwendung als elektrisch leitfähige Komponente zur Darstellung elektronischer Bauteile wie Kondensatoren auf einem flexiblen Untergrund;
- Verwendung als elektrisch leitfähige Schicht in Drucktüchern, insbesondere für Drucktücher, die für den Digitaldruck verwendet werden;
- Verwendung als elektrisch leitfähige Komponente in einer Polymermatrix als Messfühler für eine mechanische Belastung. Abhängig von der Belastung bzw. der Dehnung der elektrisch leitfähigen Komponente wird ein unterschiedlicher elektrischer Widerstand erhalten, der einen Rückschluss auf die Belastung bzw. Dehnung der umgebenden Matrix zulässt. So kann beispielsweise die mechanische Belastung von Bauteilen, die hohen Belastungen ausgesetzt sind, verfolgt werden (beispielsweise Flügel von Windrädern);
- Verwendung als elektrisch leitfähige Komponente, um die dynamische Belastung von polymeren Bauteilen wie Keilriemen, Transportbänder oder Reifen durch direkten Kontakt oder elektromagnetische Induktion zu verfolgen;
- Verwendung als elektrisch leitfähige Komponente in Funktionsfolien, die heizen oder kühlen können;
- Verwendung als flexible und dehnfähige Heizfolie im Bau- Wohn und Industriebereich; Verwendung als flexible und dehnfähige Heizfolie im Bekleidungsbereich;
- Verwendung zur Beheizung von Sportbekleidung oder Sportgeräten;
- Verwendung als elektrisch leitfähige Komponente, um elektronische Bauteile gegen elektromagnetische Strahlung abzuschirmen und /oder zu beheizen (Verwendung im Militär- und Flugzeug- und Weltraumbereich);
- Verwendung als elektrisch leitfähige flexible Komponente in flexiblen Sensoren oder Diagnosegeräten;
- Verwendung als elektrisch leitfähige flexible Komponente in flexiblen Batterien.

Die beschriebenen Verwendungen beziehen sich bevorzugt auf unflexible Anwendungen. Eine Verwendung in jeweils flexiblen Anwendungen ist ebenso möglich.

Ebenso ist es möglich, die erfindungsgemäße Zusammensetzung als Folienmaterial für eine Flächenheizung oder aber auch bei direktem Kontakt als Raumheizung zu verwenden. Zudem kann die Zusammensetzung auch als elektrische Leiterbahn verwendet werden.

Aus einer erfindungsgemäßen Zusammensetzung erzeugte Folien können gegebenenfalls nach Formgebung durch Tiefziehen, mit einer Deckschicht aus elektrisch isolierendem Klebstoff überzogen werden. Ein geeigneter Klebstoff ist z. B. ein druckempfindlicher Klebstoff auf Latexbasis wie eine mit Polyvinylalkohol stabilisierte Emulsion eines Vinyl-Acryl-Copolymers, die mit einer Schaumstoffrolle auf das Element aufgetragen werden kann. Noch besser ist es, das Heizelement in den Klebstoff einzutauchen, um sämtliche Außenflächen des Heizelementes zu beschichten. Das Eintauchen ermöglicht es, das Heizelement in einem kontinuierlichen Verfahren herzustellen. Nach dem Eintauchen kann das mit Klebstoff beschichtete Heizelement durch eine Trockenkammer geleitet werden, in der der Klebstoff mit Heizlüftern oder Heizstrahlern getrocknet wird. Der Klebstoff überzieht alle Außenflächen des Elementes einschließlich der seitlichen Ränder. Durch das Trocknen des Klebstoffs bildet sich eine Deckschicht aus elektrisch isolierendem Klebstoff, die beispielsweise 0,01 bis 0,1 mm dick ist, insbesondere etwa 0,05 mm.

Solche isolierten Heizelemente weisen neben den bereits angegebenen Vorteilen der erfindungsgemäßen Zusammensetzung den weiteren Vorteil auf, dass sie selbstklebend und gleichzeitig elektrisch isoliert sind.

Die Erfindung betrifft weiterhin eine Polymerfolie, die durch Extrusion einer erfindungsgemäßen Zusammensetzung hergestellt oder herstellbar ist. Die Extrusion erfolgt dabei beispielsweise über an sich bekannte Schmelzextrusionsverfahren.

Ein weiterer Gegenstand der vorliegenden Erfindung betrifft ein flexibles Kunststoffheizelement, das eine erfindungsgemäße Polymerfolie umfasst sowie zwei an gegenüberliegenden Rändern der Polymerfolie fixierte und mit dieser elektrisch verbundene Elektroden.

Zudem betrifft die Erfindung ein Laminat, das ein von einer Deckschicht aus einem elektrisch isolierenden Kunststoffmaterial bedecktes erfindungsgemäßes flexibles Kunststoffheizelement umfasst, wobei das elektrisch isolierende Kunststoffmaterial kompakt oder geschäumt ist. Unter einem Laminat wird ein Produkt verstanden, das aus zwei oder mehreren flächig miteinander verbundenen, z. B. verklebten, Schichten aufgebaut ist. Diese Schichten können aus gleichen oder unterschiedlichen Materialien bestehen.

Schließlich betrifft die Erfindung noch ein Trilaminat, umfassend eine erfindungsgemäße Polymerfolie, die auf ihren Flachseiten jeweils mit einer Deckschicht aus einem elektrisch isolierenden Kunststoffmaterial bedeckt ist, wobei insbesondere eine der Deckschichten aus einem kompakten und die andere aus einem geschäumten elektrisch isolierenden Kunststoffmaterial besteht oder beide Deckschichten aus einem kompakten elektrisch isolierenden Kunststoffmaterial bestehen. Die Polymerfolie kann auch in Form eines flexiblen Kunststoffheizelements eingesetzt werden.

### Verfahren

Ein weiterer Gegenstand der vorliegenden Erfindung ist ein Verfahren zur Herstellung von Artikeln aus der erfindungsgemäßen Zusammensetzung durch Vermischen einer Schmelze eines Polyolefins /einer TPE-Polyolefin Mischung oder eines TPEs mit CNT, Leitruß und ein ionisches Flüssigsalz und nachfolgender formgebender Verarbeitung.

Die erfindungsgemäßen Zusammensetzungen lassen sich nach dem erfindungsgemäßen Verfahren durch Schmelzemischen der jeweiligen Komponenten und nachfolgendes formgebendes Verarbeiten herstellen. Das Vermischen der zwingend anwesenden Inhaltsstoffe Matrixpolymer, CNT, Leitruß und organisches Flüssigsalz sowie gegebenenfalls weiterer optionaler Inhaltsstoffe erfolgt auf übliche Weise in geeigneten Mischaggregaten. Beispiele für derartige Mischaggregate sind Ein- oder Doppelschneckenextruder bzw. Kneter, Ko-Kneter, kontinuierliche Kneter und kontinuierliche Ko-Kneter, mit axial oszillierender Schnecke (Buss Ko-Kneter). Die Schneckenkonfiguration der Geräte kann vom Fachmann je nach den gewünschten Eigenschaften gewählt werden.

Für das erfindungsgemäße Verfahren können insbesondere unterschiedliche Extrusionsanlagen zum Einsatz kommen. Hier seien beispielsweise Tandemextruder oder Doppelschneckenextruder genannt. Die Austrittsdüse kann unterschiedlich ausgebildet sein, z. B. in Form einer Breitschlitzdüse, einer Ringspaltdüse, einer Viellochdüse oder einer Blockschlitzdüse. Für eine gleichzeitige Extrusion von Deckschicht und geschäumter Schicht können auch Coextrusionsanlagen eingesetzt werden.

Der für Folienextrusion notwendige Druck in einem Extruder ist anlagenabhängig. Typischerweise herrscht im Inneren eines Extruders jedoch vor der Extrusionsdüse ein Druck von mindestens 50 bar, wie etwa mindestens 70 bar, mindestens 100 bar, oder mindestens 120 bar.

Bevorzugte erfindungsgemäße Verfahren sind dabei dadurch gekennzeichnet, dass das Vermischen des Matrixpolymers mit den elektrisch leitfähigen Partikeln und dem organischen Flüssigsalz in einem Kneter oder einem Extruder, vorzugsweise einem dichtkämmenden Doppelschneckenextruder (z. B. ein Doppelschneckenextruder mit D = 25 mm und L = 30 D), erfolgt.

Der erfindungsgemäße Artikel wird aus der Schmelze, die das Matrixpolymer, das elektrisch leitfähigen Partikel und das organischen Flüssigsalz umfasst, nach üblichen Methoden der Kunststoffverarbeitung hergestellt; je nach Ausführung beispielsweise durch Spritzgießen, Extrusion, Coextrusion, Blasformen oder 3D-Blasformen bzw. Tiefziehen. Mit diesen Methoden ist der Fachmann vertraut, so dass sie hier nicht näher erläutert werden müssen. Besonders bevorzugte erfindungsgemäße Verfahren sind dadurch gekennzeichnet, dass die formgebende Verarbeitung durch Tiefziehen erfolgt.

Ein weiterer Aspekt der vorliegenden Erfindung bezieht sich auf eine Polymerfolie hergestellt durch ein Verfahren umfassend die Schritte
- Mischen einer Schmelze eines Polyolefins /einer TPE-Polyolefin Mischung oder eines TPEs mit elektrisch leitfähigen Partikeln und einem ionischen Flüssigsalz und
- optional Hinzufügen von weiteren Zusatzstoffen, bevorzugt mindestens eines Flammschutzmittels, und
- Extrusion der Schmelze.

Die erfindungsgemäße Zusammensetzung kann zur Herstellung eines dehnfähigen bzw. heißverstreckbaren elektrisch leitfähigen Gebildes insbesondere Flächengebildes verwendet werden. So kann beispielsweise eine elektrisch leitfähige Folie hergestellt werden, die auch nach Formgebung durch, z. B. einem Tiefziehverfahren weiterhin elektrisch leitfähig ist.

Bei der Heißverstreckung einer erfindungsgemäßen Zusammensetzung liegt die Temperatur typischerweise über 160 °C, bevorzugt in einem Bereich von 160 °C bis 240 °C, mehr bevorzugt in einem Bereich von 170°C bis 220 °C.

Die erfindungsgemäße Zusammensetzung kann zur Beschichtung von flexiblen, wenig flexiblen und unflexiblen Flächen eingesetzt werden.

Die vorliegende Erfindung wird im Folgenden anhand von Beispielen und den Figuren 1a bis 4 näher erläutert. Darin zeigt
- **Fig. 1 a**: den schematischen Aufbau eines erfindungsgemäßen flexiblen Kunststoffheizelements,
- **Fig. 1b**: eine seitliche Schnittdarstellung des flexiblen Kunststoffheizelements aus Fig. 1 a entlang der Linie I-I,
- **Fig. 2**: einen Ausschnitt eines Trilaminats mit einer erfindungsgemäßen Folie,
- **Fig. 3**: eine für die Experimente verwendete Tiefziehform in seitlicher Schnittdarstellung sowie
- **Fig. 4**: die Aufheizcharakteristik einer unverstreckten und einer tiefgezogenen Folie.

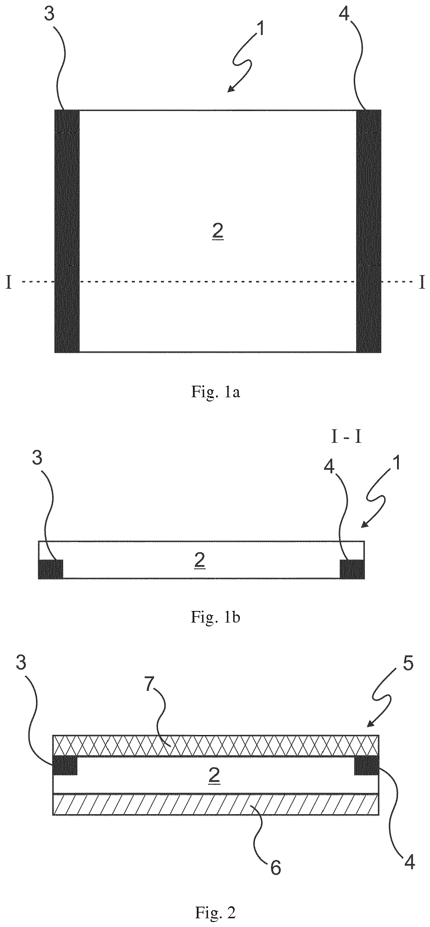

In Fig. 1a ist der schematische Aufbau eines erfindungsgemäßen flexiblen Kunststoffheizelements 1 in der Aufsicht abgebildet. Das Kunststoffheizelement 1 besteht aus einer Polymerfolie 2, welche mittels Extrusion aus einer erfindungsgemäßen Zusammensetzung erzeugt ist. An den gegenüberliegenden Rändern der Polymerfolie 2 sind Elektroden 3, 4 auf der Polymerfolie 2 angebracht und hierdurch mit dieser elektrisch verbunden. Die Elektroden 3, 4 erstrecken sich über die gesamte Kantenlänge der Polymerfolie 2.

In Fig. 1b, die das Kunststoffheizelement 1 aus Fig. 1a entlang der Schnittline I-I zeigt, ist zu erkennen, dass die Elektroden 3, 4 in die Oberfläche der Polymerfolie 2 eingelassen sind, also bündig mit der Flachseite der Polymerfolie 2 abschließen. Über die Elektroden 3, 4 kann das Kunststoffheizelement 1 an eine elektrische Spannungsquelle angeschlossen und damit betrieben werden.

Fig. 2 zeigt ein erfindungsgemäßes Trilaminat 5 in seitlicher Schnittdarstellung. Das Trilaminat 5 besitzt einen dreischichtigen Aufbau, bei dem die innere Lage durch ein Kunststoffheizelement 1 mit seitlich angebrachten Elektroden, wie in Fig. 1a gezeigt, gebildet wird. Das Kunststoffheizelement 1 ist auf seinen gegenüberliegenden Flachseiten jeweils mit einer Deckschicht 6, 7 aus elektrisch isolierendem Material vollständig bedeckt und durch einen Laminierprozess fest mit den Deckschichten 6, 7 verbunden. Als elektrisch isolierendes Material dient ein Kunststoffmaterial. Die Deckschicht 6 besteht vorliegend aus einem geschäumten und die Deckschicht 7 aus einem kompakten elektrisch isolierenden Material.

### Extrusion:

Die elektrisch leitfähige Folienzusammensetzung wird über einen gleichsinnig drehenden Zweischneckenextruder (ZSK 25) mit Breitschlitzdüse extrudiert. Die Drehzahl beträgt dabei 180 min⁻¹ und der Durchsatz 8 kg·h⁻¹. Die extrudierte Folie ist ca. 35 cm breit. Vom Einzug bis zur Düse wird folgendes Temperaturprofil eingestellt: Einzug: 200 °C; Zone 1: 200 °C; Zone 2: 200 °C; Zone 3: 200 °C; Zone 4: 190 °C; Zone 5: 180 °C; Zahnradpumpe: 200 °C, Düse: 200 °C.

### Widerstand nach Heißverstreckung:

Aus dem elektrisch leitfähigen Folienmaterial werden Probekörper (80 mm x 25 mm) ausgestanzt. Die Dicke liegt im Bereich von etwa 300 bis 500 µm. Die Probekörper werden mit leitfähigem Silberlack (LS 200 Leitsilber, Hans Wolbring) orthogonal zur Verstreckungsrichtung kontaktiert. Die Kontakte sind 10 mm lang, und 5 mm breit. Ihr Abstand beträgt 20 mm. Die kontaktierten Probekörper werden in einem Wärmezugversuch bei 160 °C bis auf entsprechend vorgegebene Dehnungen verstreckt. Die Traversengeschwindigkeit im Zugversuch beträgt 500 mm·min⁻¹. Anschließend wird über die aufgebrachten Kontakte der Widerstand gemessen.

### Tiefziehversuch mit anschließendem Heizversuch:

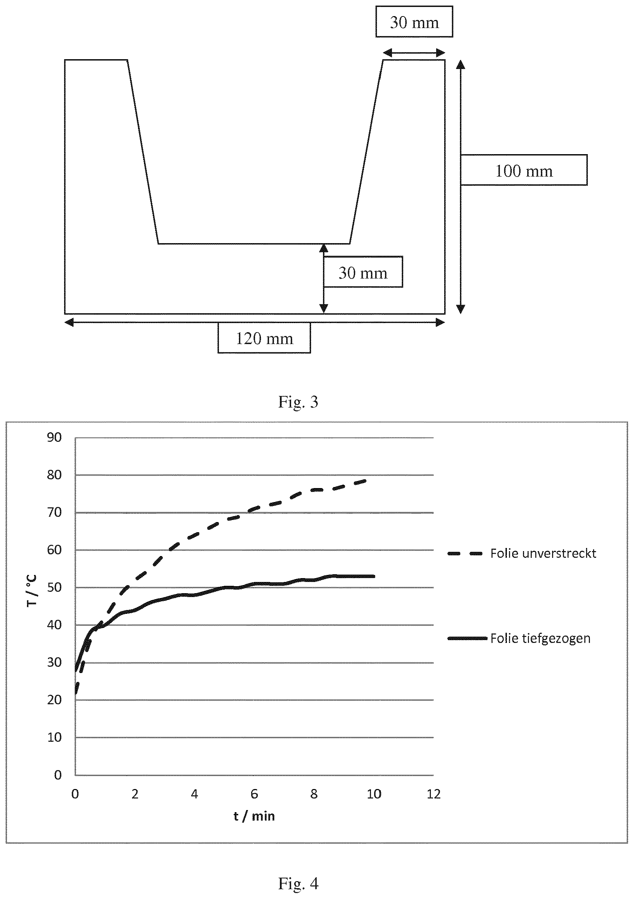

Eine erfindungsgemäße leitfähige Folie wird bei 200 °C unter Verwendung einer Tiefziehform, wie in Fig. 3 dargestellt, tiefgezogen. Die Tiefziehform besitzt eine Länge (senkrecht zur Papierebene) von etwa 110 mm. Anschließend wird aus dem seitlichen Flankenbereich, also dort, wo die Tiefziehform eine Höhe von 100 mm besitzt, ein Probenelement herausgeschnitten. Auf diesem Probenelement werden in einem Abstand von 50 mm parallel zueinander Elektroden mit einer Länge von jeweils 50 mm aus Silberlack erzeugt und elektrisch kontaktiert, so dass sich eine beheizbare Fläche von 5 x 5 cm ergibt. Diese Fläche weist einen max. Verzug von ca. 300 % auf. Mit Hilfe von Krokodilklemmen werden die Kontakte mit einem Transformator verbunden und ein Heizversuch bei einer Spannung von U = 12 V durchgeführt. Es ergibt sich die in Fig. 4 gezeigte Heizcharakteristik.

Beispiel 1: 18 Gew.% Leitruß in einer thermoplastischen Matrix, bestehend aus 38 Gew.% eines PPCopolymeren (Hifax CA 10 A: Reaktor TPO, CAS 9010-79-1, lyondellbasell), 14,5 Gew.% LLDPE (Engage 8150: LLDPE, CAS 26221-73-8, Dow), 14,5 Gew.% PE (Dowlex 2045 G: PE, CAS 26221-73-8, Dow) und 29 Gew.% TPV (Milastomer 8030 NEM: Olefinbasiertes TPV, CAS 25038-36-2, Mitsui), wobei das TPV einen MFI zwischen 10 und 15 g/10 min besitzt und 4 Gew.% Stabilisatoren und Verarbeitungshilfsmittel. Folgende Stabilisatoren und Verarbeitungshilfsmittel wurden zugesetzt oder sind Teil von Masterbatches: UV-Absorber: 2-(2H-Benzotriazol-2-yl)-4,6-ditertpentylphenol, als Masterbatch Luvofilm 9425, CAS der Reinsubstanz 25973-55-1, Antioxidans: Pentaerythritol tetrakis (3-(3,5-di-tert-butyl-4-hydroxyphenyl)propionate), Irganox 1010, CAS 6683-19-8.
Oberflächenwiderstand: 330 Ω (DIN IEC 167)
Bruchdehnung (85 °C): 3,7 % (DIN 527-3)

Beispiel 2: 10 Gew.% Carbon Nanotubes in thermoplastischer Matrix bestehend aus 38 Gew.% eines PPCopolymeren (Hifax CA 10 A: Reaktor TPO, CAS 9010-79-1, lyondellbasell), 14,5 Gew.% LLDPE (Engage 8150: LLDPE, CAS 26221-73-8, Dow), 14,5 Gew.% PE (Dowlex 2045 G: PE, CAS 26221-73-8, Dow) und 29 Gew.% TPV (Milastomer 8030 NEM: Olefinbasiertes TPV, CAS 25038-36-2, Mitsui), wobei das TPV einen MFI zwischen 10 und 15 g/10 min besitzt und 4 Gew.% Stabilisatoren und Verarbeitungshilfsmittel. Folgende Stabilisatoren und Verarbeitungshilfsmittel wurden zugesetzt oder sind Teil von Masterbatches: UV-Absorber: 2-(2H-Benzotriazol-2-yl)-4,6-ditertpentylphenol, als Masterbatch Luvofilm 9425, CAS der Reinsubstanz 25973-55-1, Antioxidans: Pentaerythritol tetrakis (3-(3,5-di-tert-butyl-4-hydroxyphenyl)propionate), Irganox 1010, CAS 6683-19-8.
Oberflächenwiderstand: 44 Ω (DIN IEC 167)
Bruchdehnung (85 °C): 28 % (DIN 527-3)

Beispiel 3 (erfindungsgemäß): 4 % Carbon Nanotubes und 23 % Leitruß und 1,5 % ionische Flüssigkeit in thermoplastischer Matrix bestehend aus 38 % eines PPCopolymeren (Hifax CA 10 A: Reaktor TPO, CAS 9010-79-1, lyondellbasell), 14,5 Gew.% LLDPE (Engage 8150: LLDPE, CAS 26221-73-8, Dow), 14,5 Gew.% PE (Dowlex 2045 G: PE, CAS 26221-73-8, Dow) und 29 Gew.% TPV (Milastomer 8030 NEM: Olefinbasiertes TPV, CAS 25038-36-2, Mitsui), wobei das TPV einen MFI zwischen 10 und 15 g/10 min besitzt und 4 Gew.% Stabilisatoren und Verarbeitungshilfsmittel. Folgende Stabilisatoren und Verarbeitungshilfsmittel wurden zugesetzt oder sind Teil von Masterbatches: UV-Absorber: 2-(2H-Benzotriazol-2-yl)-4,6-ditertpentylphenol, als Masterbatch Luvofilm 9425, CAS der Reinsubstanz 25973-55-1, Antioxidans: Pentaerythritol tetrakis (3-(3,5-di-tert-butyl-4-hydroxyphenyl)propionate), Irganox 1010, CAS 6683-19-8.
Oberflächenwiderstand: 54 Ω (DIN IEC 167)
Bruchdehnung (85 °C): 150 % (DIN 527-3)

**Tabelle 1: Heizverhalten einer erfindungsgemäßen Folie/ eines erfindungsgemäßen Tiefziehlings mit einer Zusammensetzung aus Beispiel 3**

| t/min | T / °C (Folie) | T / °C (Tiefziehling) |
|---|---|---|
| 0 | 22 | 28 |
| 0,5 | 36 | 38 |
| 1 | 42 | 40 |
| 1,5 | 48 | 43 |
| 2 | 52 | 44 |
| 2,5 | 55 | 46 |
| 3 | 59 | 47 |
| 3,5 | 62 | 48 |
| 4 | 64 | 48 |
| 4,5 | 66 | 49 |
| 5 | 68 | 50 |
| 5,5 | 69 | 50 |
| 6 | 71 | 51 |
| 6,5 | 72 | 51 |
| 7 | 73 | 51 |
| 7,5 | 75 | 52 |
| 8 | 76 | 52 |
| 8,5 | 76 | 53 |
| 9 | 77 | 53 |
| 9,5 | 78 | 53 |
| 10 | 79 | 53 |

## Patentansprüche

1. Thermoplastische Zusammensetzung umfassend Matrixpolymer bestehend aus Polyolefin, TPE-Polyolefin oder TPE, Carbon-Nanotubes (CNTs), Leitruß und organisches Flüssigsalz, wobei
der Anteil an Matrixpolymer in der Zusammensetzung von 55 Gew.% bis 81,5 Gew.% bezogen auf das Gesamtgewicht der Summe aus Matrixpolymer, CNT, Leitruß und organisches Flüssigsalz beträgt; und
der Anteil an CNT in der Zusammensetzung von 3 Gew.% bis 10 Gew.% bezogen auf das Gesamtgewicht der Summe aus Matrixpolymer, CNT, Leitruß und organisches Flüssigsalz beträgt; und
der Anteil an Leitruß in der Zusammensetzung von 15 Gew.% bis 30 Gew.% bezogen auf das Gesamtgewicht der Summe aus Matrixpolymer, CNT, Leitruß und organisches Flüssigsalz beträgt; und
der Anteil an organischen Flüssigsalz in der Zusammensetzung von 0,15 Gew.% bis 5 Gew.% bezogen auf das Gesamtgewicht der Summe aus Matrixpolymer, CNT, Leitruß und organisches Flüssigsalz beträgt; und
die Summe aus Matrixpolymer, CNTs, Leitruß und organischem Flüssigsalz mindestens 65 Gew.% bezogen auf das Gesamtgewicht der Zusammensetzung beträgt.

2. Zusammensetzung gemäß Anspruch 1, **dadurch gekennzeichnet, dass** das Matrixpolymer aus mindestens einem Polyolefin besteht.

3. Zusammensetzung gemäß Anspruch 1, **dadurch gekennzeichnet, dass** das Matrixpolymer aus einer Kombination aus Polyolefin und TPE besteht.

4. Zusammensetzung gemäß Anspruch 1, **dadurch gekennzeichnet, dass** das Matrixpolymer aus TPE besteht.

5. Zusammensetzung gemäß einem der vorhergehenden Ansprüche, **dadurch gekennzeichnet, dass** das organische Flüssigsalz ein organisches Kation enthält, das ausgewählt ist aus der Gruppe bestehend aus gegebenenfalls substituiertem aromatischen Kation mit 5, 6, 9, 10 oder 14 Kohlenstoffringatomen, wobei ein, zwei, drei oder vier Kohlenstoffringatome durch ein Schwefel, Sauerstoff und/oder Stickstoffatom ausgetauscht sein können, und ein gegebenenfalls substituiertes aliphatisches C₁-C₁₂-Aminoalkyl.

6. Zusammensetzung gemäß einem der vorhergehenden Ansprüche, **dadurch gekennzeichnet, dass** das organische Flüssigsalz aus einem Salz besteht worin das Kation ausgewählt ist aus der Gruppe bestehend aus Imidazolinium-, Pyridinium-, Pyrrolidinium-, Guanidinium-, Uronium-, Thiouronium-, Piperidinium-, Morpholinium-, Phosphonium-, C₁-C₆-Alkylammonium-, jeweils mit ein, zwei oder drei Gruppen unabhängig voneinander ausgewählt aus Amino, C₁-C₆-Hydroxyalkyl, Hydroxy, Halogen, C₁-C₆-Halogenalkyl, C₁-C₆-Alkyl substituiertes Imidazolinium-, Pyridinium-, Pyrrolidinium-, Guanidinium-, Uronium-, Thiouronium-, Piperidinium-, Morpholinium-, Phosphonium-, und Alkylammonium-Kation.

7. Zusammensetzung gemäß einem der vorhergehenden Ansprüche, **dadurch gekennzeichnet, dass** die Primärpartikel eines Leitrußes einen Durchmesser im Bereich von 5 nm bis 300 nm aufweisen.

8. Zusammensetzung gemäß einem der vorhergehenden Ansprüche, **dadurch gekennzeichnet, dass** der Faserdurchmesser der CNT im Bereich von 1 nm bis 30 nm liegt und die Faserlänge im Bereich von 500 nm bis 15 µm liegt.

9. Verwendung einer Zusammensetzung nach einem der Ansprüche 1 bis 8 als Beschichtungsmaterial.

10. Verwendung einer Zusammensetzung nach einem der Ansprüche 1 bis 8 zum Aufbau mehrschichtiger Verbundgebilde.

11. Verfahren zur Herstellung einer Zusammensetzung gemäß einem der Ansprüche 1 bis 8 umfassend die folgende Verfahrensschritte:
- Vermischen einer Schmelze eines Polyolefins /einer TPE-Polyolefin-Mischung oder eines TPEs mit elektrisch leitfähigen Partikeln und
- Zufügen mindestens eines organischen Flüssigsalzes.

12. Polymerfolie (2) hergestellt oder herstellbar durch Extrusion einer erfindungsgemäßen Zusammensetzung nach einem der Ansprüche 1 bis 8.

13. Flexibles Kunststoffheizelement (1), umfassend eine Polymerfolie (2) gemäß Anspruch 12 sowie zwei an gegenüberliegenden Rändern der Polymerfolie (2) fixierten und mit dieser elektrisch verbundenen Elektroden (3, 4).

14. Laminat, umfassend ein von einer Deckschicht (6) aus einem elektrisch isolierenden Kunststoffmaterial bedecktes flexibles Kunststoffheizelement (1) gemäß Anspruch 13, wobei das elektrisch isolierende Kunststoffmaterial kompakt oder geschäumt ist.

15. Trilaminat (5), umfassend eine Polymerfolie (2) gemäß Anspruch 12, die auf ihren Flachseiten jeweils mit einer Deckschicht (6, 7) aus einem elektrisch isolierenden Kunststoffmaterial bedeckt ist, wobei insbesondere eine der Deckschichten (6, 7) aus einem kompakten und die andere aus einem geschäumten elektrisch isolierenden Kunststoffmaterial besteht oder beide Deckschichten (6, 7) aus einem kompakten elektrisch isolierenden Kunststoffmaterial bestehen.

## Claims

1. Thermoplastic composition comprising matrix polymer consisting of polyolefin, TPE polyolefin or TPE, carbon nanotubes (CNTs), conductive carbon black and organic liquid salt wherein
the proportion of matrix polymer in the composition is from 55% by weight to 81.5% by weight based on the total weight of the sum of matrix polymer, CNT, conductive carbon black and organic liquid salt; and the proportion of CNT in the composition is from 3% by weight to 10% by weight based on the total weight of the sum of matrix polymer, CNT, conductive carbon black and organic liquid salt; and
the proportion of conductive carbon black in the composition is from 15% by weight to 30% by weight based on the total weight of the sum of matrix polymer, CNT, conductive carbon black and organic liquid salt; and
the proportion of organic liquid salt in the composition is from 0.15% by weight to 5% by weight based on the total weight of the sum of matrix polymer, CNT, conductive carbon black and organic liquid salt; and
the sum of matrix polymer, CNTs, conductive carbon black and organic liquid salt is at least 65% by weight based on the total weight of the composition.

2. Composition according to Claim 1, **characterized in that** the matrix polymer consists of at least one polyolefin.

3. Composition according to Claim 1, **characterized in that** the matrix polymer consists of a combination of polyolefin and TPE.

4. Composition according to Claim 1, **characterized in that** the matrix polymer consists of TPE.

5. Composition according to any of the preceding claims, **characterized in that** the organic liquid salt contains an organic cation selected from the group consisting of optionally substituted aromatic cations having 5, 6, 9, 10 or 14 carbon ring atoms, wherein one, two, three or four carbon ring atoms may be substituted for a sulfur, oxygen and/or nitrogen atom and an optionally substituted aliphatic C₁-C₁₂-aminoalkyl.

6. Composition according to any of the preceding claims, **characterized in that** the organic liquid salt consists of a salt in which the cation is selected from the group consisting of imidazolinium, pyridinium, pyrrolidinium, guanidinium, uronium, thiouronium, piperidinium, morpholinium, phosphonium, C₁-C₆-alkylammonium, in each case having one, two or three groups independently of one another selected from C₁-C₆-hydroxyalkyl, hydroxyl, halogen, C₁-C₆-haloalkyl, C₁-C₆-alkyl-substituted imidazolinium, pyridinium, pyrrolidinium, guanidinium, uronium, thiouronium, piperidinium, morpholinium, phosphonium and alkylammonium cations.

7. Composition according to any of the preceding claims, **characterized in that** the primary particles of a conductive carbon black have a diameter in the range from 5 nm to 300 nm.

8. Composition according to any of the preceding claims, **characterized in that** the fibre diameter of the CNT is in the range from 1 nm to 30 nm and the fibre length is in the range from 500 nm to 15 µm.

9. Use of the composition according to any of Claims 1 to 8 as the coating material.

10. Use of a composition according to any of Claims 1 to 8 for construction of multi-layered composite articles.

11. Process for producing a composition according to any of Claims 1 to 8 comprising the following process steps:
- mixing a melt of a polyolefin/of a TPE-polyolefin mixture or of a TPE with electrically conductive particles and
- adding at least one organic liquid salt.

12. Polymer film (2) produced or producible by extrusion of a composition of the invention according to any of Claims 1 to 8.

13. Flexible plastic heating element (1) comprising a polymer film (2) according to Claim 12 and two electrodes (3, 4) secured at opposite edges of the polymer film (2) and electrically connected thereto.

14. Laminate comprising a flexible plastic heating element (1) according to Claim 13 covered by a covering layer (6) of an electrically insulating plastics material, wherein the electrically insulating plastics material is compact or foamed.

15. Trilaminate (5) comprising a polymer film (2) according to Claim 12 covered on each of its flat sides by covering a layer (6, 7) of an electrically insulating plastics material, wherein in particular one of the covering layers (6, 7) is made of a compact electrically insulating plastics material and the other is made of a foamed electrically insulating plastics material or both covering layers (6, 7) are made of a compact electrically insulating plastics material.

## Revendications

1. Composition thermoplastique comprenant un polymère de matrice constitué par une polyoléfine, une combinaison polyoléfine-TPE (élastomère thermoplastique) ou un TPE, des nanotubes de carbone (NTC), de la suie conductrice et un sel liquide organique,
- la proportion de polymère de matrice dans la composition étant de 55% en poids à 81,5% en poids, par rapport au poids total de la somme de polymère de matrice, de NTC, de suie conductrice et de sel liquide organique ; et
- la proportion de NTC dans la composition étant de 3% en poids à 10% en poids, par rapport au poids total de la somme de polymère de matrice, de NTC, de suie conductrice et de sel liquide organique ; et
- la proportion de suie conductrice dans la composition étant de 15% en poids à 30% en poids, par rapport au poids total de la somme de polymère de matrice, de NTC, de suie conductrice et de sel liquide organique ; et
- la proportion de sel liquide organique dans la composition étant de 0,15% en poids à 5% en poids, par rapport au poids total de la somme de polymère de matrice, de NTC, de suie conductrice et de sel liquide organique ; et
- la somme de polymère de matrice, de NTC, de suie conductrice et de sel liquide organique étant d'au moins 65% en poids, par rapport au poids total de la composition.

2. Composition selon la revendication 1, **caractérisée en ce que** le polymère de matrice est constitué par au moins une polyoléfine.

3. Composition selon la revendication 1, **caractérisée en ce que** le polymère de matrice est constitué par une combinaison de polyoléfine et de TPE.

4. Composition selon la revendication 1, **caractérisée en ce que** le polymère de matrice est constitué de TPE.

5. Composition selon l'une quelconque des revendications précédentes, **caractérisée en ce que** le sel liquide organique contient un cation organique qui est choisi dans le groupe constitué par un cation aromatique le cas échéant substitué comprenant 5, 6, 9, 10 ou 14 atomes de carbone, un, deux, trois ou quatre atomes de cycle carboné pouvant être remplacé(s) par un atome de soufre, d'oxygène et/ou d'azote, et un C₁-C₁₂-aminoalkyle aliphatique le cas échéant substitué.

6. Composition selon l'une quelconque des revendications précédentes, **caractérisée en ce que** le sel liquide organique est constitué par un sel dans lequel le cation est choisi dans le groupe constitué par les cations imidazolinium, pyridinium, pyrrolidinium, guanidinium, uronium, thio-uronium, pipéridinium, morpholinium, phosphonium, C₁-C₆-alkylammonium ; les cations imidazolinium, pyridinium, pyrrolidinium, guanidinium, uronium, thio-uronium, pipéridinium, morpholinium, phosphonium et alkylammonium comprenant à chaque fois un, deux ou trois groupes choisis indépendamment les uns des autres parmi amino, C₁-C₆-hydroxyalkyle, hydroxy, halogène, C₁-C₆-halogénoalkyle, C₁-C₆-alkyle.

7. Composition selon l'une quelconque des revendications précédentes, **caractérisée en ce que** les particules primaires d'une suie conductrice présentent un diamètre dans la plage de 5 nm à 300 nm.

8. Composition selon l'une quelconque des revendications précédentes, **caractérisée en ce que** le diamètre de fibre des NTC se situe dans la plage de 1 nm à 30 nm et la longueur de fibre se situe dans la plage de 500 nm à 15 µm.

9. Utilisation d'une composition selon l'une quelconque des revendications 1 à 8 comme matériau de revêtement.

10. Utilisation d'une composition selon l'une quelconque des revendications 1 à 8 pour la construction de structures composites multicouches.

11. Procédé pour la préparation d'une composition selon l'une quelconque des revendications 1 à 8, comprenant les étapes de procédé suivantes :
- mélange d'une masse fondue d'une polyoléfine/d'un mélange de TPE-polyoléfine ou d'un TPE avec des particules électriquement conductrices et
- addition d'au moins un sel liquide organique.

12. Feuille polymère (2) fabriquée ou pouvant être fabriquée par extrusion d'une composition selon l'invention selon l'une quelconque des revendications 1 à 8.

13. Élément chauffant en matériau synthétique souple (1), comprenant une feuille polymère (2) selon la revendication 12 ainsi que deux électrodes (3, 4) fixées au niveau de deux bords opposés de la feuille polymère (2) et reliées électriquement à celle-ci.

14. Stratifié, comprenant un élément chauffant en matériau synthétique souple (1) selon la revendication 13, revêtu par une couche de recouvrement (6) en un matériau synthétique électriquement isolant, le matériau synthétique électriquement isolant étant compact ou moussé.

15. Stratifié à trois couches (5), comprenant une feuille polymère (2) selon la revendication 12, qui est revêtue sur ses côtés plats à chaque fois par une couche de recouvrement (6, 7) en un matériau synthétique électriquement isolant, une des couches de recouvrement (6, 7) étant en particulier constituée par un matériau synthétique électriquement isolant compact et l'autre par un matériau synthétique électriquement isolant moussé ou les deux couches de recouvrement (6, 7) étant constituées par un matériau synthétique électriquement isolant compact.
